# EUROPÄISCHE PATENTSCHRIFT

(11) **EP 3 189 411 B1**
(45) Veröffentlichungstag und Bekanntmachung des Hinweises auf die Patenterteilung: **22.04.2020**
(21) Anmeldenummer: 15750975.3
(22) Anmeldetag: 05.08.2015
(51) Int. Cl.: G06F 3/12, G06F 1/16

(54) **MOBILE DOKUMENTENHERSTELLUNGSANORDNUNG**
MOBILE DOCUMENT PRODUCTION SYSTEM
SYSTÈME MOBILE DE PRODUCTION DE DOCUMENTS

(30) Priorität: 01.09.2014 DE 102014112530
(43) Veröffentlichungstag der Anmeldung: 12.07.2017
(73) Patentinhaber: Bundesdruckerei GmbH, 10969 Berlin (DE)
(72) Erfinder: SCHIPPMANN, Matthias, 22159 Hamburg (DE); MALIN, Joscha, 20144 Hamburg (DE); THIESSEN, Stefan, 22453 Hamburg (DE)
(74) Vertreter: Patentship Patentanwaltsgesellschaft mbH
(86) Internationale Anmeldenummer: PCT/EP2015/068087
(87) Internationale Veröffentlichungsnummer: WO 2016/034360

(56) Entgegenhaltungen:
- FR-A1- 2 753 818

## Beschreibung

Die vorliegende Erfindung betrifft eine mobile Dokumentenherstellungsanordnung zur Herstellung eines Identifikationsdokumentes.

Zur Beantragung, Erzeugung oder Ausgabe von Identifikationsdokumenten im Rahmen eines Enrolment-Prozesses werden zur Datenerfassung, beispielsweise zur Erfassung von Personendaten wie biographischen Daten oder von biometrischen Daten, verschiedene elektrische Geräte, beispielsweise ein Druckergerät zum Ausdrucken des Identifikationsdokumentes, ein Dokumentenlesegerät zur Erfassung von Daten eines Identifikationsdokumentes oder eine Bildkamera für die Aufnahme eines Personenbildes benötigt. Soll die Datenerfassung an unterschiedlichen, auch schwer zugänglichen Orten, durchgeführt werden, so müssen die elektrischen Geräte zum Einsatzort sicher transportiert werden und am Einsatzort möglichst rasch betriebsbereit gemacht werden.

Auf dem Transportwege können die elektrischen Geräte zudem unterschiedlichen Umwelteinflüssen, wie Staub, Schmutz, Feuchtigkeit, Spritzwasser oder Transporteinflüssen wie Stöße oder Erschütterungen ausgesetzt werden. Aus diesem Grund müssen die elektrischen Geräte für den Transport zum Einsatzort aufwendig verpackt werden.

Die Offenlegungsschrift FR 2 753 818 A1 zeigt eine Vorrichtung zum Editieren von Ausweiskarten. Die Vorrichtung umfasst ein Gehäuse. Das Gehäuse umschließt einen Drucker zum Ausdrucken von Ausweiskarten.

Es ist daher die Aufgabe der vorliegenden Erfindung, eine mobile Dokumentenherstellungsanordnung zu schaffen, welche einfach und geschützt transportierbar ist.

Diese Aufgabe wird durch die Merkmale der unabhängigen Ansprüche gelöst. Vorteilhafte Weiterbildungsformen sind Gegenstand der unabhängigen Ansprüche, der Zeichnungen und der Beschreibung.

Die Erfindung basiert auf der Erkenntnis, dass die Aufgabe durch eine feste Montage von elektrischen Geräten für die Herstellung, insbesondere Bedruckung, eines Identifikationsdokumentes Datenerfassung, beispielsweise im Rahmen eines Enrolment-Prozesses, auf einer Grundplatte gelöst werden kann. Die Grundplatte mit einem oder mehreren Geräten bildet dabei eine eigenständige, betriebsbereite Einheit, welche als alleistehende Einheit transportierbar und einsetzbar ist.

Die elektrischen Geräte sind beispielsweise ein Drucker zum Ausdrucken eines Ausweisdokumentes, ein Dokumentenlesegerät, eine Kamera zur Aufnahme eines Personenbildes, beispielsweise zur Gesichtsbildaufnahme, ein Kamerastativ, beispielsweise ein Klappstativ, für die Aufnahme der Bildkamera, ein Dokumentenscanner wie Flachbrettscanner, ein Fingerabdruckscanner, ein Signaturpad, ein EC-Cash-Terminal, ein UMTS/LTE-Stick, ein Code-Scanner wie Barcode-Scanner bzw. weitere Geräte.

Die elektrischen Geräte sind auf der Grundplatte beispielsweise so montiert, dass sie sofort einsatzbereit sind und nach einem Transport vor dem Beginn eines Einsatzes nicht erst sofort montiert oder zusammengesteckt werden müssen.

Gemäß einem Aspekt betrifft die Erfindung eine mobile Dokumentenherstellungsanordnung, mit: einer tragbaren Grundplatte; einem Druckergerät zum Ausdrucken des Identifikationsdokumentes, wobei das Druckergerät mit der tragbaren Grundplatte mechanisch verbunden ist; einer Kommunikationsschnittstelle zur Kommunikation mit dem Druckergerät, wobei die Kommunikationsschnittstelle mit der tragbaren Grundplatte mechanisch verbunden ist, und wobei die Kommunikationsschnittstelle mit dem Druckergerät elektrisch verbunden ist; und einer Energieversorgungsschnittstelle zur Versorgung der mobilen Dokumentenherstellungsanordnung mit elektrischer Energie.

Unter dem Begriff "Ausdrucken eines Identifikationsdokumentes" wird im Folgenden ein Bedrucken eines Dokumententrägers, beispielsweise aus Papier, Baumwollgemisch, Kunststoff, das vorgedruckt oder nicht vorgedruckt sein kann.

Die mobile Dokumentenherstellungsanordnung mit einem oder mehreren Geräten bildet eine eigenständige, betriebsbereite Einheit zur Erzeugung eines Identifikationsdokumentes, welche als alleistehende Einheit transportierbar und einsetzbar ist. Die mobile Dokumentenherstellungsanordnung kann daher beispielsweise in einem Koffer transportiert werden, welcher lediglich die Transportfunktion übernimmt und beispielsweise keine weiteren Geräte der mobilen Dokumentenherstellungsanordnung beherbergt. Somit kann die mobile Dokumentenherstellungsanordnung stets aus dem Koffer herausgenommen und außerhalb des Koffers in Betrieb genommen werden, ohne dass der Koffer hierzu benötigt wird.

Das Druckergerät kann mit der Kommunikationsschnittstelle beispielsweise mittels einer Datenleitung verbunden werden. Auf diese Weise kann das Druckergerät zum Ausdrucken des Identifikationsdokumentes über die Kommunikationsschnittstelle angesteuert werden.

Das Identifikationsdokument kann ein Betriebsausweis sein. Das Identifikationsdokument kann ferner eines der folgenden Identitätsdokumente sein: ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, ein Zahlungsmittel, eine Bankkarte, oder eine Kreditkarte.

Das Identifikationsdokument kann ferner einen elektronisch auslesbaren Schaltkreis, beispielsweise einen RFID-Chip, umfassen. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt sind, wobei die Folien bevorzugt ähnliche stoffliche Eigenschaften aufweisen.

Gemäß einer Ausführungsform ist die mobile Dokumentenherstellungsanordnung in einem Transportbehälter, insbesondere in einem Koffer, transportierbar, wobei die mobile Dokumentenherstellungsanordnung für einen Betrieb aus dem Transportbehälter herausnehmbar ist. Der Transportbehälter wird somit für den Betrieb nicht benötigt, da sämtliche Komponenten der mobilen Dokumentenherstellungsanordnung auf der Grundplatte angeordnet sind.

Gemäß einer Ausführungsform ist das Druckergerät über die Kommunikationsschnittstelle, insbesondere mit Daten des Identifikationsdokumentes, ansteuerbar, um das Identifikationsdokument auszudrucken.

Die Daten des Identifikationsdokumentes, beispielsweise die Personendaten wie Name, Adresse, Geburtsdatum, Bilddaten, welche ein Personenbild repräsentieren, oder Nummer des Identifikationsdokumentes können über die Kommunikationsschnittstelle mittels eines an die Kommunikationsschnittstelle anschließbaren Computers übermittelt werden, um den Drucker zum Ausdrucken des Identifikationsausweises anzusteuern. Hierbei kann der Drucker die Daten auf einer Druckvorlage, beispielsweise aus Papier, Baumwollgemisch oder Kunststoff, für das Identifikationsdokument ausgedruckt werden. Ferner kann auf dem Computer eine programmtechnische Formatvorlage installiert sein, in welche die Daten eintragbar sind und mit der Formatvorlage an den Drucker übermittelbar sind. Die Formatvorlage kann eine programmtechnische Repräsentation des Identifikationsdokumentes darstellen.

Gemäß einer Ausführungsform ist das Druckergerät ein Tintenstrahldrucker oder ein Laserdrucker. Allgemein kann das Druckergerät als ein Ausweisdrucker ausgebildet sein.

Gemäß einer Ausführungsform ist die tragbare Grundplatte aus gebogenem Blech gefertigt. Die Grundplatte umfasst eine Oberseite für die Aufnahme der elektrischen Geräte sowie eine der Oberseite abgewandte Unterseite für die Aufnahme von Datenleitungen, welche die elektrischen Geräte mit der Kommunikationsschnittstelle oder untereinander verbinden.

Gemäß einem Beispiel umfasst die elektrische Energieversorgungsschnittstelle ein Stromkabel zur Verbindung der elektrischen Energieversorgungsschnittstelle mit einer Energiequelle wie einer Steckdose.

Gemäß einer Ausführungsform ist das Druckergerät zur Energieversorgung elektrisch mit der Energieversorgungsschnittstelle verbunden. Auf diese Weise kann eine Energieversorgung von außen realisiert werden.

Gemäß einer Ausführungsform umfasst die mobile Dokumentenherstellungsanordnung ein ausfahrbares, insbesondere ausklappbares oder teleskopartig ausfahrbares, Kamerastativ zur Halterung einer Bildkamera zur Erfassung eines Personenbildes, wobei das Kamerastativ mechanisch, insbesondere mittels eines schwenkbaren Gelenkes, mit der Grundplatte verbunden ist. Das Kamerastativ kann mittels eines schwenkbaren Gelenkes für den Transport umgelegt und dadurch liegend transportiert werden.

Gemäß einer Ausführungsform umfasst die mobile Dokumentenherstellungsanordnung eine Bildkamera, welche mit dem Kamerastativ mechanisch verbunden und mit der Kommunikationsschnittstelle elektrisch verbunden ist, wobei die Bildkamera ausgebildet ist, ein erfasstes Bild des Identifikationsdokumentes über die Kommunikationsschnittstelle auszugeben oder wobei die Bildkamera über die Kommunikationsschnittstelle steuerbar ist. Die Bildkamera kann mittels einer Datenleitung mit der Kommunikationsschnittstelle verbunden werden. Die Bildkamera kann eine Weißlicht-Bildkamera oder eine Infrarot-Bildkamera oder eine Ultraviolett-Bildkamera sein.

Gemäß einer Ausführungsform umfasst die mobile Dokumentenherstellungsanordnung nach zumindest ein weiteres elektrisches Gerät, das mechanisch mit der Grundplatte und elektrisch mit der Kommunikationsschnittstelle, beispielsweise über eine Datenleitung, verbunden ist.

Gemäß einer Ausführungsform ist das elektrische Gerät zur Energieversorgung mit der Energieversorgungsschnittstelle verbunden.

Gemäß einer Ausführungsform umfasst die mobile Dokumentenherstellungsanordnung eines oder mehrere der folgenden elektrischen Geräte:
ein Signaturaufnahmegerät, insbesondere Signaturpad, zur elektronischen Erfassung einer Personensignatur, ein Biometrieerfassungsgerät, insbesondere einen Fingerabdruckscanner oder einen Iris-Scanner, zur Erfassung zumindest eines biometrischen Personenmerkmals, ein optisches Codelesegerät zur optischen Erfassung eines optischen Codes, insbesondere eines Barcodes oder eines QR-Codes, ein Chipkarten-Lesegerät umfasst, wobei das Chipkarten-Lesegerät zum Auslesen von Chipkartendaten einer Chipkarte, insbesondere einer Bankkarte oder eines elektronischen Personalausweises, ein Dokumentenlesegerät, insbesondere einen Dokumentenscanner, ein drahtloses Kommunikationsgerät eine drahtlose Datenkommunikation über ein Kommunikationsnetzwerk, insbesondere ein Bluetooth-, UMTS-, WLAN- oder LTE-Kommunikationsnetzwerk, ein EC-Cash-Terminal, einen UMTS/LTE-Stick, einen Computer, einen Datenspeicher.

Ist das weitere Gerät ein Dokumentenlesegerät zum optischen Erfassen eines Identifikationsdokumentes, insbesondere ein Dokumentenscanner wie Flachbrettscanner, so kann das Dokumentenlesegerät eine Beleuchtungsquelle und eine Bilderfassungseinrichtung zur Erfassung eines optischen Bildes des Identifikationsdokumentes umfassen. Die Beleuchtungsquelle ist ausgebildet, Weißlicht, Infrarotlicht oder Ultraviolettlicht auszusenden.

Gemäß einem Beispiel ist das Dokumentenlesegerät ausgebildet, ein erfasstes optisches Bild des Identifikationsdokumentes über die Kommunikationsschnittstelle auszugeben, wobei das Dokumentenlesegerät über die Kommunikationsschnittstelle steuerbar ist. Das optische Bild kann digital mittels einer Datenleitung an die Kommunikationsschnittstelle übertragen werden.

Gemäß einer Ausführungsform ist an der Grundplatte, insbesondere seitlich, ein Tragegriff zum Tragen der Grundplatte angeordnet. Ferner kann ein weiterer Tragegriff vorgesehen sein, um die Grundplatte beidhändig tragen zu können. Der jeweilige Tragegriff kann beispielsweise in der Gestalt eines Tragehenkels geformt sein.

Gemäß einer Ausführungsform umfasst die mobile Dokumentenherstellungsanordnung eine Formabdeckung, insbesondere aus Kunststoff wie Schaumstoff, zum Abdecken der Grundplatte, wobei in der Formabdeckung eine Vertiefung für die Aufnahme eines elektrischen Gerätes, insbesondere eines mobilen Computers gebildet ist. Die Formabdeckung kann ferner Formelemente wie Aufnahmemulden oder Trennstege aufweisen, um die elektrischen Geräte einzeln aufzunehmen.

Gemäß einer Ausführungsform ist die Kommunikationsschnittstelle mit einem Computer zur Steuerung der mobilen Dokumentenherstellungsanordnung, insbesondere der Geräte der mobilen Dokumentenherstellungsanordnung, verbindbar. Dadurch können die Geräte der mobilen Dokumentenherstellungsanordnung zentral gesteuert werden, um beispielsweise einen Dokumentenlesevorgang zur Erfassung des Bildes des Identifikationsdokumentes oder weiterer Personendaten aus einem Chip des Identifikationsdokumentes auszulösen oder zu steuern.

Gemäß einer Ausführungsform ist an der Grundplatte, insbesondere an einer Unterseite der Grundplatte, welche einer Oberseite mit zumindest einem Gerät abgewandt ist, ein elektrisches Netzteil für das zumindest eine Gerät angeordnet. Dadurch können die elektrischen Geräte unter Verwendung des jeweils passenden Netzteils für unterschiedliche Versorgungsspannungen betrieben werden.

Gemäß einer Ausführungsform ist die Kommunikationsschnittstelle oder die Energieschnittstelle in einem Seitenteil der Grundplatte angeordnet.

Die elektrischen Geräte können an sich bekannte elektrische Geräte sein, deren Funktionsweise und Aufbau in den Fachkreisen oder allgemein bekannt sind.

Gemäß einem weiteren Aspekt betrifft die Erfindung ein mobiles Datenerfassungssystem, mit der erfindungsgemäßen mobilen Dokumentenherstellungsanordnung nach einem der vorstehenden Ansprüche; und
einem staubdicht verschließbaren Koffer für die Aufnahme der mobilen Dokumentenherstellungsanordnung nach einem der vorstehenden Ansprüche, wobei die tragbare Grundplatte aus dem Koffer herausnehmbar ist.

Der Koffer kann gemäß der Schutzklasse IP67 verschließbar sein. Der Koffer kann ein Hartschalenkoffer aus Kunststoff oder aus Metall sein und Wasser- und Staubdicht verschließbar sein. Der Koffer kann ferner eine Auflage, insbesondere durch seitliche Vorsprünge gebildet, für die Aufnahme der Grundplatte mit den elektrischen Geräten.

Weitere Ausführungsformen der Erfindung werden Bezug nehmend auf die beiliegenden Figuren erläutert. Es zeigen:
- Fig. 1: eine mobile Dokumentenherstellungsanordnung;
- Fig. 2: die eine mobile Dokumentenherstellungsanordnung;
- Fig. 3: die eine mobile Dokumentenherstellungsanordnung; und
- Fig. 4: eine mobile Dokumentenherstellungsanordnung.

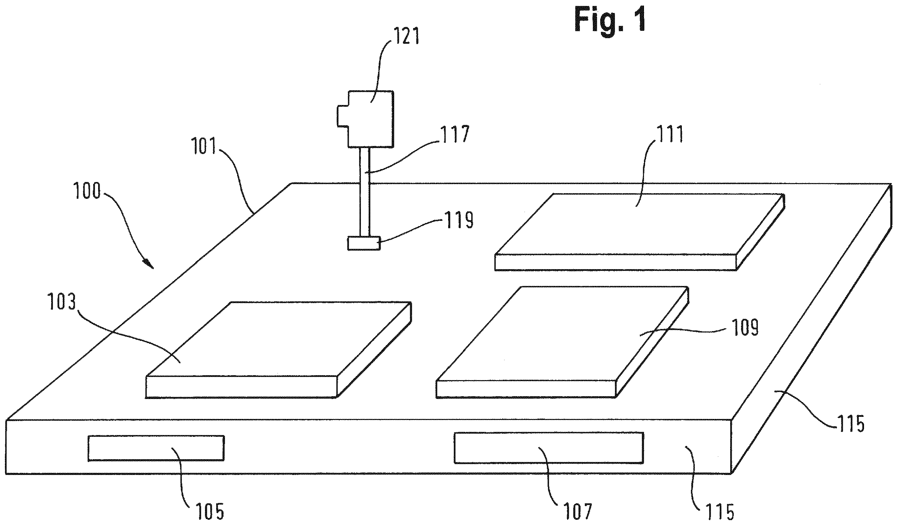

Fig. 1 zeigt schematisch eine mobile Dokumentenherstellungsanordnung 100 gemäß einer Ausführungsform. Die mobile Dokumentenherstellungsanordnung 100 umfasst eine tragbare Grundplatte 101 sowie ein Druckergerät 103 zum Ausdrucken eines Identifikationsdokumentes, wobei das Druckergerät 103 mit der tragbaren Grundplatte 101 mechanisch verbunden, beispielsweise verschraubt, ist. Ferner ist eine Kommunikationsschnittstelle 105 zur Kommunikation mit dem Druckergerät 103 vorgesehen, wobei die Kommunikationsschnittstelle 105 mit der tragbaren Grundplatte 101 mechanisch verbunden ist, und wobei die Kommunikationsschnittstelle 105 mit dem Druckergerät 103, d.h. mit einer Kommunikationsschnittstelle des Druckergerätes 103, elektrisch verbunden ist. Ferner ist eine Energieversorgungsschnittstelle 107 zur Versorgung der mobilen Dokumentenherstellungsanordnung 100 bzw. des Druckergerätes 103 oder optionaler weiterer elektrischer Geräte der Dokumentenherstellungsanordnung 100 mit elektrischer Energie.

Die Grundplatte 101 weist eine Oberseite auf, auf der das Druckergerät 103 sowie optionale weitere Geräte angeordnet sind. Ferner weist die Grundplatte 101 Seitenteile 115 auf. Die Kommunikationsschnittstelle 105 sowie die Energieschnittstelle 107 sind bevorzugt an oder in einem der Seitenteile 115der Grundplatte 101 gebildet. Eine in Fig. 1 nicht sichtbare Unterseite bildet eine Rückseite der Grundplatte 101.

Die Grundplatte kann beispielsweise durch ein Blech geformt sein, wobei die Seitenteile 115 durch Seitenbiegungen des Bleches geformt sein können.

Die Grundplatte kann jedoch quaderförmig sein, mit einem Innenraum, in dem beispielsweise Netzteile oder Datenleitungen angeordnet sind, welche das Druckergerät 103 oder weitere optionale elektrische Geräte mit der Kommunikationsschnittstelle 105 verbinden.

Auf der Grundplatte 101 kann ferner ein Kamerastativ 117 mittels eines Gelenkes 119 angeordnet sein. Das Kamerastativ 117 ist vorgesehen, eine Bildkamera 121 für die Bilderfassung eines Personenbildes zu halten. Die Bildkamera 121 ist gemäß einer Ausführungsform mit dem Kamerastativ 117 mechanisch fest verbunden und mittels einer Datenleitung mit der Kommunikationsschnittstelle 105 verbunden. Dadurch kann die Bildkamera 121 über die Kommunikationsschnittstelle 105 entweder das erfasste digitale Personenbildausgeben oder steuerbar sein, um beispielsweise auszulösen.

Das Kamerastativ 117 ist mittels des Gelenkes 119 beispielsweise schwenkbar gelagert, sodass das Kamerastativ 117 zum Transport umgelegt werden kann.

Auf der Grundplatte 101 kann ferner ein weiteres elektrisches Gerät 109 mechanisch befestigt sein, das beispielsweise ein Signaturaufnahmegerät, insbesondere ein Signaturpad, zur elektronischen Erfassung einer Personensignatur. Das Signaturaufnahmegerät 109 kann über eine Datenleitung mit der Kommunikationsschnittstelle 105 verbunden sein, wodurch die erfasste Personensignatur als Datensatz ausgegeben werden kann, und/oder wodurch das weitere elektrische Gerät 109 über die Kommunikationsschnittstelle 101 gesteuert werden kann.

Die mobile Dokumentenherstellungsanordnung 100 kann ferner eines oder mehrere der folgenden elektrischen Geräte 111 umfassen, welche jeweils mechanisch auf der Grundplatte befestigt sind und mit der Kommunikationsschnittstelle 105 jeweils mittels einer Datenleitung 105 verbunden sind: ein Biometrieerfassungsgerät, insbesondere ein Fingerabdruckscanner oder ein Iris-Scanner, zur Erfassung zumindest eines biometrischen Personenmerkmals, ein optisches Codelesegerät zur optischen Erfassung eines optischen Codes, insbesondere eines Barcodes oder eines QR-Codes, ein Chipkarten-Lesegerät umfasst, wobei das Chipkarten-Lesegerät zum Auslesen von Chipkartendaten einer Chipkarte, insbesondere einer Bankkarte oder eines elektronischen Personalausweises, ein Dokumentenlesegerät, insbesondere einen Dokumentenscanner wie Flachbrettscanner, , ein drahtloses Kommunikationsgerät eine drahtlose Datenkommunikation über ein Kommunikationsnetzwerk, insbesondere ein Bluetooth-, UMTS-, WLAN- oder LTE-Kommunikationsnetzwerk, ein EC-Cash-Terminal, ein UMTS/LTE-Stick, ein Computer, ein Datenspeicher.

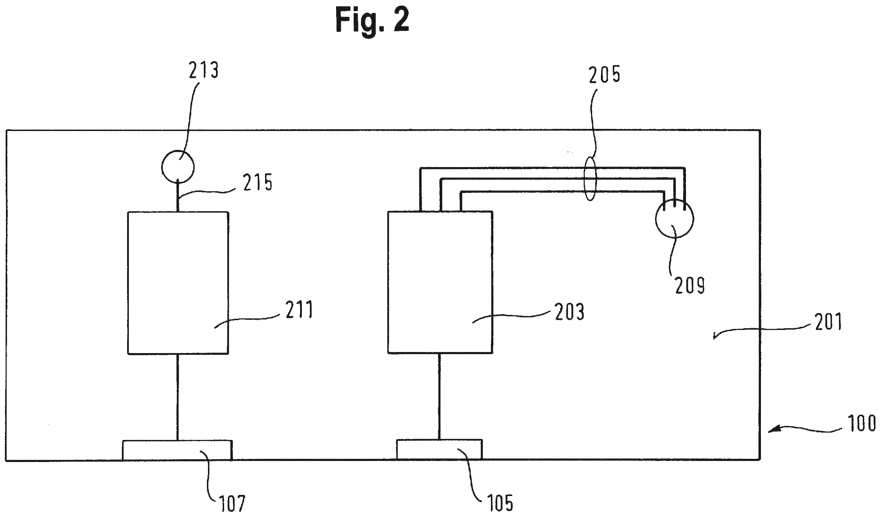

Fig. 2 zeigt schematisch eine Rückseite 201 der Grundplatte 101. Auf der Rückseite 201 ist beispielsweise ein Datenverteiler 203, beispielsweise ein Switch oder ein Hub angeordnet, welcher die Kommunikationsschnittstelle 105 über die Datenleitungen 205 mit den elektrischen Geräten 103, 121, 111, 109, d.h. mit deren Kommunikations- bzw. Steuerungsschnittstellen verbinden. Die Datenleitungen sind beispielsweise durch eine optionale Öffnung 209 in der Grundplatte 101 geführt und mit den elektrischen Geräten 103, 121, 111, 109 verbunden.

Auf der Rückseite 201 können ferner eines oder mehrere Netzteile 211 angeordnet sein, welche für die Energieversorgung eines oder mehrerer der elektrischen Geräte 103, 121, 111, 109 vorgesehen sind. Das jeweilige Netzteil 201 ist an der Unterseite 201 mechanisch befestigt. In der Rückseite 201 kann eine weitere Öffnung 213 gebildet sein, durch welche die elektrischen Leitungen 215 geführt sind, um die auf der Grundplatte 101 angeordneten elektrischen Geräte 103, 121, 111, 109 mit elektrischer Energie zu versorgen. Das Netzteil 201 kann eine zentrale Netzstromversorgung bilden.

Die Energieschnittstelle 107 kann eine Buchse oder einen Stecker oder ein elektrisches Kabel umfassen.

Gemäß einem Beispiel umfasst die Grundplatte 101 einen nicht dargestellten Bodendeckel, welcher die Unterseite 201 abdeckt. Der Bodendeckel kann auf den Seitenwandungen der Grundplatte 101 aufliegen und mit diesen beispielsweise verschraubt sein.

Die jeweilige mechanische Verbindung kann eine Schraubverbindung, eine Rastverbindung, eine Klettverschlussverbindung, eine Kraftschlussverbindung oder eine Formschlussverbindung sein.

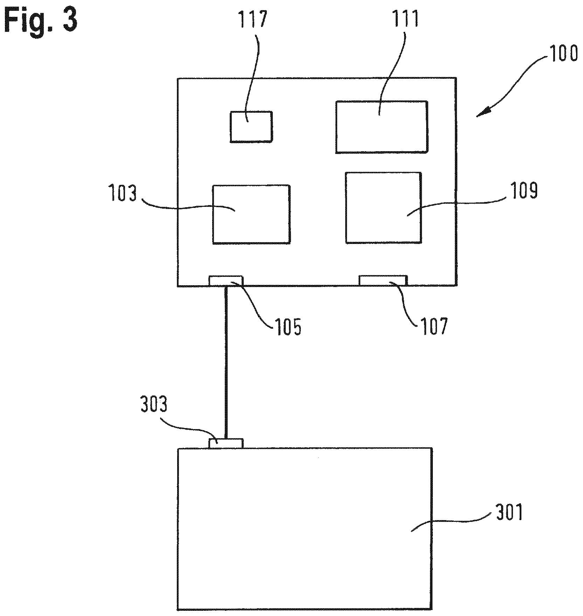

Fig. 3 zeigt schematisch eine Verbindung der mobilen Dokumentenherstellungsanordnung 100 über die Kommunikationsschnittstelle 105 mit einem tragbaren Computer 301, das eine zu der Kommunikationsschnittstelle 105 korrespondierende Kommunikationsschnittstelle 303 aufweist.

Die jeweilige Kommunikationsschnittstelle 105, 303 kann eine drahtlose oder drahtgebundene Kommunikationsschnittstelle, beispielsweise eine USB-Schnittstelle, eine WLAN-Schnittstelle, eine Bluetooth-Schnittstelle oder eine Ethernet-Schnittstelle sein.

Die elektrischen Geräte 103, 121, 111, 109 mobilen Dokumentenherstellungsanordnung 100 können mittels des tragbaren Computers 301 angesteuert werden bzw. diesen die erfassten digitalen Daten über die Kommunikationsschnittstelle 105 zur Weiterverarbeitung, Auswertung, Authentifizierung oder Identifikation übertragen werden.

Der tragbare Computer 301, beispielsweise ein Notebook, mit dem die elektrischen Geräte 103, 121, 111, 109 angesteuert werden können, wird im Betrieb beispielsweise neben der Grundplatte 101 positioniert und mit den elektrischen Geräten 103, 121, 111, 109 mittels einer Datenleitung über die Kommunikationsschnittstelle 105 oder direkt mittels der Datenleitungen 205.

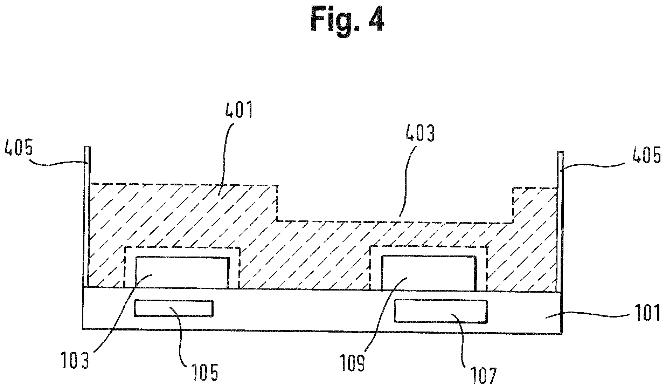

Fig. 4 zeigt schematisch eine Seitenansicht der mobilen Dokumentenherstellungsanordnung 101, mit einer optionalen Formabdeckung 401, insbesondere aus Kunststoff wie Schaumstoff, zum Abdecken der Grundplatte 101, wobei in der Formabdeckung 401 eine Vertiefung 403 für die Aufnahme eines elektrischen Gerätes, insbesondere des mobilen Computers 301, gebildet ist.

In Fig. 4 sind ferner Tragegriffe 405 dargestellt, welche seitlich an der Grundplatte 101 befestigt und zum Tragen der mobilen Dokumentenherstellungsanordnung 101 vorgesehen sind.

Die mobile Dokumentenherstellungsanordnung 100 kann in einem staubdicht verschließbaren, beispielsweise gemäß der Schutzklasse IP67, Koffer transportiert werden. Die mobile Dokumentenherstellungsanordnung 100 ist dabei aus dem Koffer herausnehmbar, um rasch für den jeweiligen Einsatz betriebsfähig zu sein.

Zum sicheren Transport der mobilen Dokumentenherstellungsanordnung 100 mit den elektrischen Geräten 103, 121, 111, 109 kann eine robuste Kofferschale vorgesehen sein, welche nach IP67 zertifiziert sein kann. Dadurch wird ein Schutz der elektrischen Geräte 103, 121, 111, 109 gegen Staub, Schmutz und Wasser erreicht.

Im Innenraum des Koffers können schützende Schaumstoffeinlagen vorgesehen sein, um die elektrischen Geräte 103, 121, 111, 109 gegen Stöße zu schützen. Der Koffer kann ferner eine Vorrichtung zum Druckausgleich umfassen, sodass er mittels einem Flugzeug, beispielsweise als Gepäck, transportierbar ist. Für den Transport kann die Kofferschale einen integrierten Trolley umfassen.

Zum Betrieb wird die Grundplatte 101 aus dem Koffer entnommen und beispielsweise auf einen Arbeitstisch gestellt. Die Grundplatte 101 ist bevorzugt nicht fest mit dem Koffer verbunden sondern ist beispielsweise lose in der Kofferschale eingelegt. Somit befinden sich die für den Betrieb vorgesehenen elektrischen Geräte 103, 121, 111, 109 auf der Grundplatte 101, sodass der Koffer für den Betrieb nicht benötigt wird. Der Koffer wird insbesondere nicht auf dem Arbeitstisch positioniert.

Zur Herstellung der Betriebsbereitschaft der mobilen Datenerfassungsvorrichtung 100 wird die Energieschnittstelle 107 und somit die zentrale Energieversorgung wie das Netzteil 211 mit Netzstrom verbunden. Ferner wird der tragbare Computer über eine Datenleitung mit der Kommunikationsschnittstelle 105 verbunden. Zwecks Betrieb kann das Kamerastativ 117 aufgerichtet werden, das Signaturerfassungsgerät 109 aus eine Halterung, welche auf der Grundplatte 101 angeordnet ist, herausgenommen und ggf. auf dem Arbeitstisch positioniert werden. Die Betriebsfähigkeit der mobilen Datenerfassungsvorrichtung 100 kann somit innerhalb weniger Minuten hergestellt werden. Dies wird dadurch erreicht, dass sämtliche elektrische Geräte 103, 121, 111, 109 betriebsbereit auf der Grundplatte 101 montiert sind und dass die Grundplatte 101 nicht mit dem Koffer verbunden ist, sodass die Kofferschale nicht umständlich auf dem Arbeitstisch positioniert werden muss.

Die mobile Datenerfassungsvorrichtung 100 bildet gemäß einer Ausführungsform ein mobiles Enrolment-Kit für den Transport in unterschiedlichen Umgebungen.

Allgemein betrifft die Erfindung einen Gegenstand wie in den Ansprüchen beschrieben.

### Bezugszeichenliste

- 100: Mobile Dokumentenherstellungsanordnung
- 101: Grundplatte
- 103: Druckergerät
- 105: Kommunikationsschnittstelle
- 107: Energieschnittstelle
- 109: elektrisches Gerät
- 111: elektrisches Gerät
- 115: Seitenteil
- 117: Kamerastativ
- 121: Kamera

- 201: Rückseite
- 203: Datenverteiler
- 205: Datenleitung
- 209: Öffnung
- 211: Netzteil
- 213: Öffnung
- 215: elektrische Leitung

- 301: tragbarer Computer
- 303: Kommunikationsschnittstelle

- 401: Formabdeckung
- 403: Vertiefung
- 405: Tragegriff

## Patentansprüche

1. Mobile Dokumentenherstellungsanordnung (100) zum Herstellen eines Identifikationsdokumentes, mit:
einer tragbaren aus Blech geformten Grundplatte (101), wobei an der Grundplatte (101) ein Tragegriff (405) zum Tragen der mobilen Dokumentenherstellungsanordnung (100) befestigt ist, und wobei die Seitenteile (115) der Grundplatte (101) durch Seitenbiegungen des Blechs geformt sind;
einer Kommunikationsschnittstelle (105) die in einem Seitenteil (115) der Grundplatte (101) angeordnet ist;
einem ausfahrbaren, insbesondere ausklappbaren oder teleskopartig ausfahrbaren, Kamerastativ (117) zur Halterung einer Bildkamera (121) zur Erfassung eines Personenbildes, wobei das Kamerastativ (117) mechanisch, insbesondere mittels eines schwenkbaren Gelenkes (119), mit der Grundplatte (101) fest verbunden ist;
einer Bildkamera (121), welche mit dem Kamerastativ (117) mechanisch verbunden und mit der Kommunikationsschnittstelle (105) elektrisch verbunden ist, wobei die Bildkamera ausgebildet ist, ein erfasstes Bild des Identifikationsdokumentes über die Kommunikationsschnittstelle (105) auszugeben und wobei die Bildkamera über die Kommunikationsschnittstelle (105) steuerbar ist;
einem Druckergerät (103) zum Ausdrucken des Identifikationsdokumentes, wobei das Druckergerät mit der Kommunikationsschnittstelle (105) elektrisch verbunden ist, und wobei das Druckergerät (103) auf der tragbaren Grundplatte (101) montiert ist;
einem mobilen Computer (301) zur Steuerung der Bildkamera (121) und des Druckergerät (103) via Kommunikationsschnittstelle (105) zum Ausdrucken des Identifikationsdokuments;
einer Energieversorgungsschnittstelle (107) zur Versorgung der mobilen Dokumentenherstellungsanordnung (100) mit elektrischer Energie, wobei die Energieversorgungsschnittstelle (107) in einem Seitenteil (115) der Grundplatte (101) angeordnet ist;
einer ausschließlich für den Transport der Grundplatte (101) verwendeten Formabdeckung (401) zum Abdecken der Grundplatte (101), wobei in der Formabdeckung (401) eine Vertiefung (403) für die Aufnahme des mobilen Computers (301) gebildet ist; und
zumindest einem elektrischen Netzteil (211), welches auf der Rückseite (201) der Grundplatte (101), welche einer Oberseite mit zumindest einem befestigten Gerät (103, 109, 111, 121) abgewandt ist, angeordnet ist.

2. Mobile Dokumentenherstellungsanordnung (100) nach Anspruch 1, wobei die mobile Dokumentenherstellungsanordnung (100) in einem Transportbehälter, insbesondere in einem Koffer, transportierbar ist, wobei die mobile Dokumentenherstellungsanordnung (100) für einen Betrieb aus dem Transportbehälter herausnehmbar ist.

3. Mobile Dokumentenherstellungsanordnung (100) nach einem der vorstehenden Ansprüche, wobei das Druckergerät (103) ein Tintenstrahldrucker oder ein Laserdrucker ist.

4. Mobile Dokumentenherstellungsanordnung (100) nach einem der vorstehenden Ansprüche, wobei das Druckergerät (103) zur Energieversorgung elektrisch mit der Energieversorgungsschnittstelle (107) verbunden ist.

5. Mobile Dokumentenherstellungsanordnung (100) nach einem der vorstehenden Ansprüche, mit zumindest einem weiteren elektrischen Gerät (109, 111), das mechanisch mit der Grundplatte (101) und elektrisch mit der Kommunikationsschnittstelle (105) verbunden ist.

6. Mobile Dokumentenherstellungsanordnung (100) nach Anspruch 5, wobei das weitere elektrische Gerät (109, 111) zur Energieversorgung mit der Energieversorgungsschnittstelle (107) verbunden ist.

7. Mobile Dokumentenherstellungsanordnung (100) nach Anspruch 5 oder 6, wobei das weitere elektrische Gerät (109, 111) eines der folgenden elektrischen Geräte ist:
ein Signaturaufnahmegerät, insbesondere Signaturpad, zur elektronischen Erfassung einer Personensignatur,
ein Biometrieerfassungsgerät, insbesondere ein Fingerabdruckscanner oder ein Iris-Scanner, zur Erfassung zumindest eines biometrischen Personenmerkmals,
ein optisches Codelesegerät zur optischen Erfassung eines optischen Codes, insbesondere eines Barcodes oder eines QR-Codes,
ein Chipkarten-Lesegerät, wobei das Chipkarten-Lesegerät zum Auslesen von Chipkartendaten einer Chipkarte, insbesondere einer Bankkarte oder eines elektronischen Personalausweises,
ein Dokumentenlesegerät zur optischen Erfassung des Identifikationsdokumentes,
ein drahtloses Kommunikationsgerät eine drahtlose Datenkommunikation über ein Kommunikationsnetzwerk, insbesondere ein Bluetooth-, UMTS-, WLAN- oder LTE-Kommunikationsnetzwerk,
ein EC-Cash-Terminal,
ein UMTS/LTE-Stick,
ein Computer,
ein Datenspeicher.

8. Mobiles Datenerfassungssystem, mit:
der mobilen Dokumentenherstellungsanordnung (100) nach Anspruch 1; und
einem staubdicht verschließbaren Koffer für die Aufnahme der mobilen Dokumentenherstellungsanordnung nach Anspruch 1, wobei die tragbare Grundplatte (101) aus dem Koffer herausnehmbar ist.

## Claims

1. A mobile document production system (100) for producing an identification document, comprising:
a portable base plate (101); the base plate (101) being formed from a metal sheet, wherein a carrying handle (405) for carrying the mobile document production system (100) is arranged on the base plate (100), and wherein the side sections (115) of the base plate (101) are formed by bent sides of the sheet;
a communication interface (105), which is arranged in a side panel (115) of the base plate (101);
an extendable, in particular foldable or telescopically extendable, camera stand (117) for holding a camera (121) for capturing an image of a person, wherein the camera stand (117) is mechanically fixedly connected to the base plate (101), in particular by means of a pivot joint (119);
a camera (121), which is mechanically connected to the camera stand (117) and is electrically connected to the communication interface (105), wherein the camera is designed to output a captured image of the identification document via the communication interface (105) and wherein the camera can be controlled via the communication interface (105);
a printing device (103) for printing the identification document, wherein the printing device (103) is electrically connected to the communication interface (105), and wherein the printing device (103) is mounted on the portable base plate (101);
a portable computer (301) for controlling the camera (121) and the printing device (103) via the communication interface (105) for printing the identification document;
a power supply interface (107) for supplying the mobile document production system (100) with electric power, wherein the power interface (107) is arranged in a side panel (115) of the base plate (101);
a molded cover (401) for covering the base plate (101), the molded cover (401) being only used during the transport of the base plate (101), wherein a recess (403) for receiving the mobile computer (301) is formed in the molded cover (401); and
at least one electrical power supply component (211), which is arranged on a back side (201) of the base plate (101) which faces away from a top surface comprising at least one attached device (103, 109, 111, 121).

2. The mobile document production system (100) according to claim 1, wherein the mobile document production system (100) can be transported in a transport container, in particular in a carrying case, and wherein the mobile document production system (100) can be removed from the transport container for operation.

3. The mobile document production system (100) according to any of the preceding claims, wherein the printing device (103) is an inkjet printer or a laser printer.

4. The mobile document production system (100) according to any of the preceding claims, wherein the printing device (103) is electrically connected to the power supply interface (107) for a supply of power.

5. The mobile document production system (100) according to any of the preceding claims, comprising at least one additional electrical device (109, 111), which is mechanically connected to the base plate (101) and is electrically connected to the communication interface (105).

6. The mobile document production system (100) according to claim 5, wherein the additional electrical device (109, 111) is connected to the power supply interface (107) for a supply of power.

7. The mobile document production system (100) according to claim 5 or 6, wherein the additional electrical device (109, 111) is one of the following electrical devices:
a signature capture device, in particular a signature pad, for electronically capturing a personal signature,
a biometric capture device, in particular a fingerprint scanner or an iris scanner, for capturing at least one biometric personal characteristic,
an optical code reader for optically capturing an optical code, in particular a barcode or a QR-code,
a chip card reader, wherein the chip card reader for reading chip card data of a chip card, in particular a bank card or electronic identity card,
a document reader for optically capturing the identification document,
a wireless communication device wireless data communication via a communication network, in particular a Bluetooth, UMTS, WLAN or LTE communication network,
an EC cash terminal,
a UMTS/LTE stick,
a computer,
a data storage device.

8. A mobile data capture system, comprising:
the mobile document production system (100) according to claim 1; and
a carrying case that is closable in a dust-tight manner for accommodating the mobile document production system according to claim 1, wherein the portable base plate (101) can be removed from the case.

## Revendications

1. Arrangement de production de documents mobile (100) destiné à produire un document d'identification, comprenant :
une plaque de base (101) portable façonnée en tôle, une poignée de transport (405) destinée à transporter l'arrangement de production de documents mobile (100) étant fixée à la plaque de base (101), et les parties latérales (115) de la plaque de base (101) étant façonnées par des cintrages latéraux de la tôle ;
une interface de communication (105) qui est disposée dans une partie latérale (115) de la plaque de base (101) ;
un pied de caméra (117) extractible, notamment dépliable ou extractible de manière télescopique, destiné à maintenir une caméra d'imagerie (121) destinée à capturer une image de personne, le pied de caméra (117) étant relié à demeure à la plaque de base (101) mécaniquement, notamment au moyen d'une articulation (119) pivotante ;
une caméra d'imagerie (121), laquelle est reliée mécaniquement au pied de caméra (117) et reliée électriquement à l'interface de communication (105), la caméra d'imagerie étant configurée pour délivrer une image capturée du document d'identification par le biais de l'interface de communication (105) et la caméra d'imagerie pouvant être commandée par le biais de l'interface de communication (105) ;
un appareil d'impression (103) destiné à imprimer le document d'identification, l'appareil d'impression étant relié électriquement à l'interface de communication (105) et l'appareil d'impression (103) étant monté sur la plaque de base (101) portable ;
un ordinateur mobile (301) destiné à commander la caméra d'imagerie (121) et l'appareil d'impression (103) par le biais de l'interface de communication (105) en vue d'imprimer le document d'identification ;
une interface d'alimentation en énergie (107) destinée à alimenter l'arrangement de production de documents mobile (100) en énergie électrique, l'interface d'alimentation en énergie (107) étant disposée dans une partie latérale (115) de la plaque de base (101) ;
un capot façonné (401) destiné à recouvrir la plaque de base (101) et utilisé exclusivement pour le transport de la plaque de base (101), une cavité (403) destinée à accueillir l'ordinateur mobile (301) étant formée dans le capot façonné (401) ; et
au moins un bloc d'alimentation électrique (211), lequel est disposé sur le côté arrière (201) de la plaque de base (101) qui se trouve à l'opposé d'un côté supérieur comportant au moins un appareil (103, 109, 111, 121) fixé.

2. Arrangement de production de documents mobile (100) selon la revendication 1, l'arrangement de production de documents mobile (100) pouvant être transporté dans un contenant de transport, notamment dans une mallette, l'arrangement de production de documents mobile (100) pouvant être sorti du contenant de transport pour une utilisation.

3. Arrangement de production de documents mobile (100) selon l'une des revendications précédentes, l'appareil d'impression (103) étant une imprimante à jet d'encre ou une imprimante laser.

4. Arrangement de production de documents mobile (100) selon l'une des revendications précédentes, l'appareil d'impression (103) étant relié électriquement à l'interface d'alimentation en énergie (107) en vue de l'alimentation en énergie.

5. Arrangement de production de documents mobile (100) selon l'une des revendications précédentes, comprenant au moins un appareil électrique (109, 111) supplémentaire, lequel est relié mécaniquement à la plaque de base (101) et électriquement à l'interface de communication (105).

6. Arrangement de production de documents mobile (100) selon la revendication 5, l'appareil électrique (109, 111) supplémentaire étant relié électriquement à l'interface d'alimentation en énergie (107) en vue de l'alimentation en énergie.

7. Arrangement de production de documents mobile (100) selon la revendication 5 ou 6, l'appareil électrique (109, 111) supplémentaire étant l'un des appareils électriques suivants :
un appareil d'enregistrement de signature, notamment un pavé de signature, destiné à l'acquisition électronique de la signature d'une personne,
un appareil d'acquisition biométrique, notamment un lecteur d'empreinte digitale ou un dispositif de balayage d'iris, destiné à l'acquisition d'au moins une caractéristique biométrique d'une personne,
un lecteur de code électronique destiné à l'acquisition optique d'un code optique, notamment d'un code à barres ou d'un code QR,
un lecteur de carte à puce, le lecteur de carte à puce à lire des données de carte à puce d'une carte à puce, notamment d'une carte bancaire ou d'une pièce d'identité personnelle électronique,
un lecteur de document destiné à l'acquisition optique d'un document d'identification,
un appareil de communication sans fil une communication de données sans fil par le biais d'un réseau de communication, notamment un réseau de communication Bluetooth, UMTS, WLAN ou LTE,
un terminal de paiement EC,
une clé UMTS/LTE,
un ordinateur,
une mémoire de données.

8. Système d'acquisition de données mobile, comprenant :
un arrangement de production de documents mobile (100) selon la revendication 1 ; et
une mallette pouvant être fermée hermétiquement à la poussière pour accueillir l'arrangement de production de documents mobile selon la revendication 1, la plaque de base (101) portable pouvant être sortie de la mallette.
